# EUROPEAN PATENT APPLICATION

(11) **EP 0 926 844 A2**
(43) Date of publication of application: **30.06.1999**
(21) Application number: 98309932.6
(22) Date of filing: 04.12.1998
(51) Int. Cl.: H04B 7/04, H01Q 3/26

(54) **Multi-sector cell pattern for a wireless communication system**

(30) Priority: 26.12.1997 US 998505
(71) Applicant: LUCENT TECHNOLOGIES INC., Murray Hill, New Jersey 07974-0636 (US)
(72) Inventor: Honcharenko, Walter, Monmouth Junction, New Jersey 08852 (US)
(74) Representative: Buckley, Christopher Simon Thirsk

(57) **Abstract**

A packet-based wireless system is configured in accordance with a cell pattern which utilizes multi-sector directional cells. An illustrative embodiment utilizes a five-sector cell pattern, with five approximately 72° directional antennas in the base station of each cell. The assignment of frequency channels to cell sectors in the cell pattern repeats itself in six-cell groups throughout the system. This cell pattern allows the system to utilize a frequency reuse factor of one, such that substantially the same set of communication channels may be used in each cell of the system. In other possible implementations of the cell pattern, the sector positions of the directional antennas may be arranged such that the sectors in a given cell are rotated by an integer or non-integer number of sectors relative to the sectors of a neighboring cell, or the sector positions of the directional antennas may be fixed for all of the cells. The invention can be used to increase the capacity of a non-CDMA wireless system without significantly increasing co-channel interference.

## Description

### Field of the Invention

The present invention relates generally to wireless communication systems, and more particularly to multi-sector directional antenna arrangements for use in the cells of a wireless communication system.

### Background of the Invention

Cell layout in a wireless communication system is determined as a function of factors such as available spectrum, frequency reuse, interference requirements and traffic loads. Cell engineering typically involves minimizing interference and maximizing coverage with a given radio link budget, typically defined either by regulations or hardware capability. Adequate coverage can be achieved, for example, by shrinking cells to ensure good signal-to-noise levels at the cell boundaries, or by adding gain into the radio frequency (RF) path through the use of amplifiers or high gain antennas. Although interference levels are also dependent on the RF paths, antenna directivity and distance can reduce interference from neighboring co-channel users.

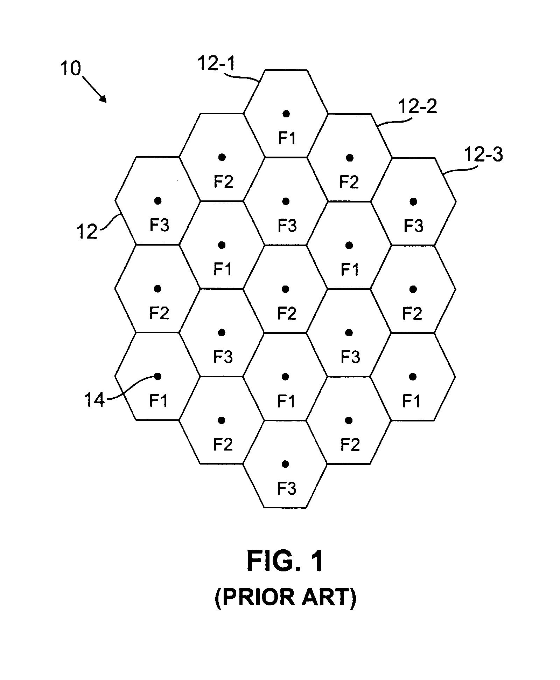

FIG. 1 illustrates a portion of a conventional cellular system 10 comprised of a number of cells 12, each of which includes a base station 14. The cells 12 in this example are shown as being hexagonal in shape. The base stations of the system 10 communicate with users equipped with mobile terminals such as cellular telephones or portable computers, or fixed terminals such as terminals with fixed, rooftop-mounted antennas. The system 10 utilizes omnidirectional base station antennas and a frequency reuse factor of three. The frequency reuse factor of three indicates that system 10 supports three different sets of communication frequencies or channels, designated F1, F2 and F3. For example, cells 12-1, 12-2 and 12-3 utilize channels F1, F2 and F3, respectively. The channels are assigned to the cells in accordance with a pattern which is designed to reduce the likelihood of co-channel interference. However, due to interference limitations, an omnidirectional cell pattern such as that shown in system 10 typically provides a low capacity when utilized to communicate with directional user terminals, and an even lower capacity when used to communicate with omnidirectional user terminals.

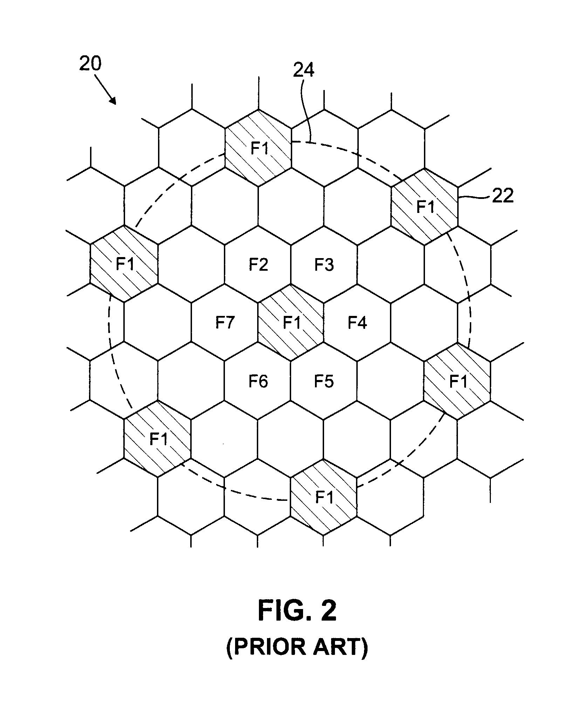

FIG. 2 shows a portion of a conventional omnidirectional wireless system 20 which utilizes a frequency reuse factor of seven. The frequency reuse factor of seven provides reduced co-channel interference relative to the system 10 of FIG. 1, at the cost of reduced capacity. The omnidirectional cells 22 of the system 20 are arranged in accordance with a seven-cell hexagonal pattern, with the seven cells of a given seven-cell group using frequency channels F1, F2, ... F7. The pattern repeats as shown, such that, for example, frequency channel F1 is reused by the center cell of six different seven-cell groups that surround the central seven-cell group in FIG. 2. The other frequencies F2, F3, ... F7 are reused in a similar manner. The radius of the dashed circle 24 interconnecting the center cells of the six seven-cell groups is known as the "reuse distance" of the system 20. Additional details regarding cell layouts such as those used in the systems of FIGS. 1 and 2 can be found in, for example, D.M. Balston and R.C.V. Macario, editors, "Cellular Radio Systems," Artech House, Norwood, MA, 1993; M.D. Yacoub, "Foundations of Mobile Radio Engineering," CRC Press, Boca Raton, FL, 1993; and A. Mehrotra, "Cellular Radio: Analog and Digital Systems," Artech House, Norwood, MA, 1994.

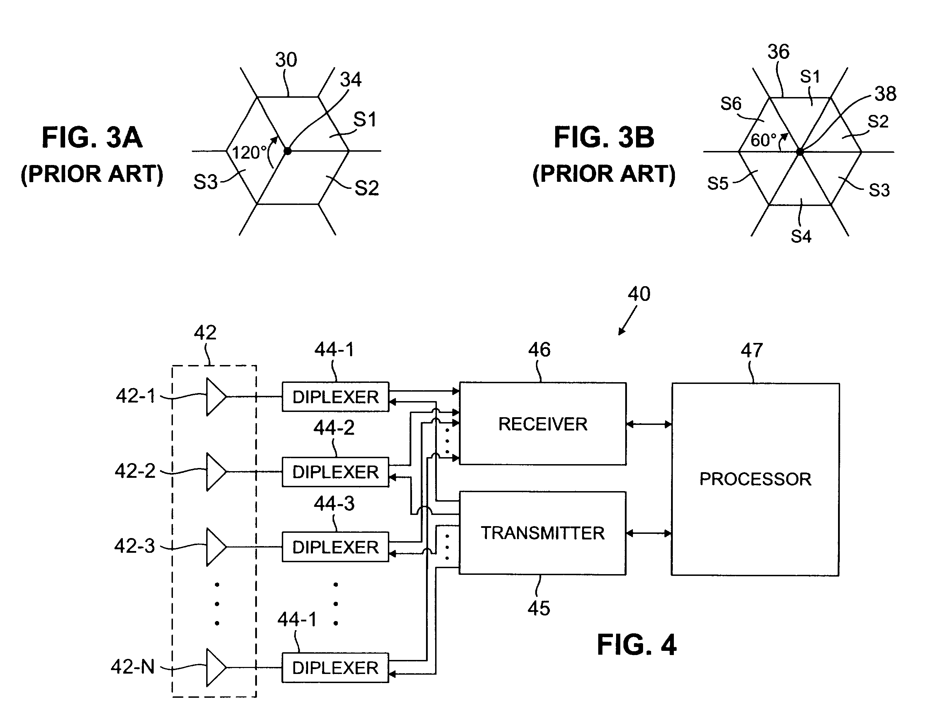

FIGS. 3A and 3B illustrate the manner in which directional antennas can be used to further reduce co-channel interference and increase capacity in an omnidirectional system such as that shown in FIG. 2. As shown in FIG. 3A, a given cell 30 with a base station 34 is configured to utilize three 120° directional antennas which define three sectors S1, S2 and S3. A different frequency channel is used in each of the sectors S1, S2 and S3. The cells can therefore be arranged such that the frequency channel used by a given sector in one group of cells is directed away from a reuse cell in another group which uses the same frequency channel, thereby reducing co-channel interference in the system. Prior art systems have been configured to utilize other arrangements of directional antennas, including the six-sector arrangement shown in FIG. 3B, in which a given cell 36 with a base station 38 utilizes six 60° directional antennas which define sectors S1, S2, ... S6.

These and other conventional directional antenna arrangements for circuit-switched systems have generally only been utilized in systems with reuse factors greater than one, such as the systems of FIGS. 1 and 2. In a system with a reuse factor of one, neighboring cells use the same frequency channel or set of channels. Unfortunately, conventional directional antenna arrangements for circuit-switched systems are generally thought to be unsuitable for providing a frequency reuse factor of one in non-code division multiple access (CDMA) systems.

A need therefore exists for an improved multi-sector cell pattern for a wireless system, which can provide increased capacity and a lower frequency reuse factor than patterns based on the above-noted conventional directional antenna arrangements.

### Summary of the Invention

The invention provides multi-sector cell patterns which can be implemented with a frequency reuse factor as low as one, such that neighboring cells of a wireless system can each use the same set of frequency channels. In an illustrative embodiment, a packet-based wireless system includes a number of cells, each having a base station with a five-sector directional antenna. The five-sector directional antenna may include five approximately 72° sectors. The five-sector cells are arranged in accordance with a cell pattern which minimizes co-channel interference resulting from reuse of the same set of communication channels in each cell. The assignment of frequency channels to cell sectors in the cell pattern repeats itself in six-cell groups throughout the system. The packet-based wireless system may also make use of acknowledgments, retransmission attempts and other similar conventional features to further reduce the effects of co-channel interference resulting from the low frequency reuse factor.

In another possible implementation of the above-noted illustrative five-sector embodiment, the sector positions of the directional antennas may be varied in accordance with a rotated sector pointing angle. In such an implementation, the sectors in a given cell are rotated by an integer or non-integer number of sectors relative to the sectors of one or more neighboring cells in order to avoid interference caused by direct sector alignment. In yet another implementation, the sector positions of the directional antennas may be fixed for all of the cells of the system.

Unlike circuit-switched systems based on conventional directional antenna arrangements, a packet-based system configured with a multi-sector cell pattern in accordance with the invention can provide effective performance with a frequency reuse factor as low as one. The invention therefore provides the advantages of increased cell capacity and minimal co-channel interference in non-CDMA systems. The cell patterns of the invention are particularly effective in applications in which the system users are equipped with directional terminals, such as, for example, terminals with fixed, rooftop-mounted directional antennas. These and other features and advantages of the present invention will become more apparent from the accompanying drawings and the following detailed description.

### Brief Description of the Drawings

FIG. 1 illustrates a portion of a conventional wireless communication system with omnidirectional cells and a frequency reuse factor of three.

FIG. 2 illustrates a portion of a conventional wireless communication system with omnidirectional cells and a frequency reuse factor of seven.

FIGS. 3A and 3B show wireless system cells utilizing conventional directional antenna arrangements.

FIG. 4 shows a base station which may be used to implement a multi-sector directional antenna arrangement with a frequency reuse factor of one in accordance with the invention.

FIGS. 5A-5E illustrate a wireless communication system with five-sector directional cells and a frequency reuse factor of one, in accordance with an exemplary embodiment of the invention.

FIG. 6 illustrates an exemplary sector configuration for one of the sectors in the wireless system of FIGS. 5A-5E.

FIGS. 7 and 8 illustrate alternative sector configurations for a given sector in a five-sector directional cell pattern in accordance with the invention.

### Detailed Description of the Invention

The invention will be illustrated below in conjunction with exemplary wireless communication system configurations. Although particularly well-suited for use in conjunction with packet-based communication systems, the invention is not limited to use with any particular type of wireless system. The disclosed multi-sector cell patterns may be used in any application in which it is desirable to provide increased capacity without unduly increasing co-channel interference or the cost and complexity of the system. The term "cell" as used herein refers generally to an operating area or region of a cellular system or other type of wireless system. The term "channel" as used herein should be understood to include a single frequency, a set of frequencies, a frequency band or any other grouping or arrangement of one or more communication frequencies. The term "reuse factor" as used herein refers generally to the number of different channels which are reused by different cells of a wireless system.

As noted above, conventional directional antenna arrangements such as those described in conjunction with FIGS. 3A and 3B have generally only been utilized in systems with reuse factors greater than one, such as the systems of FIGS. 1 and 2. The present invention provides multi-sector cell patterns which can provide a frequency reuse factor as low as one in a packet-based or other type of wireless system, such that neighboring cells can each use the same frequency channel. The cell patterns of the invention can thus provide the advantages of increased cell capacity and minimal co-channel interference in a variety of wireless systems. The illustrative embodiments of the invention to be described below are assumed without limitation to be packet-based systems. It should be noted that packet-based systems can generally tolerate a certain amount of co-channel interference, through the use of acknowledgments, retransmission attempts and similar well-known features. This is generally not the case with circuit-switched systems, such as a voice-based cellular system which does not have the capability of retransmitting data that was received incorrectly or corrupted during transmission as a result of co-channel interference.

FIG. 4 shows a base station 40 which may be used to implement a multi-sector directional antenna arrangement in a system with a frequency reuse factor of one in accordance with the invention. The base station 40 includes a set 42 of N directional antennas 42-i, i = 1, 2, ... N. The directional antennas 42-i in this embodiment are used both to transmit signals to and to receive signals from mobile or fixed terminals associated with users of the system. Each of the antennas 42-i is coupled to a corresponding diplexer filter 44-i. The diplexer filters 44-i each direct base-to-user transmit signals from a transmitter 45 to the directional antenna 44-i, and direct user-to-base receive signals from directional antenna 44-i to a receiver 46. The base station 40 also includes a processor 47 which controls the operations of the transmitter 45 and receiver 46. It should be noted that the arrangement of base station 40 is exemplary only, and that the invention could be implemented using many other types of base stations. As will be described in greater detail below, the set 42 of directional antennas can be arranged in the cells of a wireless system so as to provide a reuse factor of one, and a corresponding increase in system capacity, without unduly increasing co-channel interference.

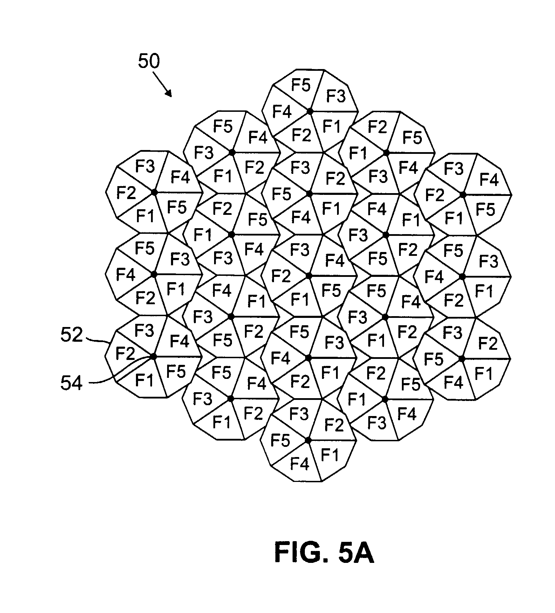

FIGS. 5A-5E show portions of a wireless packet-based communication system 50 which includes a number of cells 52. As shown in FIG. 5A, each of the cells 52 includes a base station 54 which may be configured in the manner described in conjunction with FIG. 4 above. In accordance with the invention, the cells 52 each include five approximately equivalent sectors S1, S2, S3, S4 and S5 arranged as shown. The corresponding base stations 54 therefore each include five directional antennas, each providing approximately 72° of coverage. Each of the sectors S1, S2, ... S5 in each of the cells 52 operates on the same frequency channel F1, F2, ... F5, respectively. The system 50 thus utilizes a frequency reuse factor of one, in that each of the cells 52 reuses the same set of frequency channels. For example, if the system 10 has an operating bandwidth of about 5 MHz, each of the sectors S1 through S5 of each of the cells 52 may be assigned to operate with one of five 1 MHz frequency channels. The frequency channels are assigned to the sectors in accordance with a cell pattern that minimizes co-channel interference between neighboring cells. The cell pattern of FIGS. 5A-5E is designed to provide optimal performance in applications in which users are equipped with directional terminals, such as, for example, terminals with fixed, rooftop-mounted directional antennas. The exemplary cell pattern is shown in FIG. 5A by the shading of the various sectors of the cells 52. The type of shading in each sector of each cell indicates the frequency channel which is assigned to that sector. Sectors with the same shading in FIG. 5A are therefore operating on the same frequency channel.

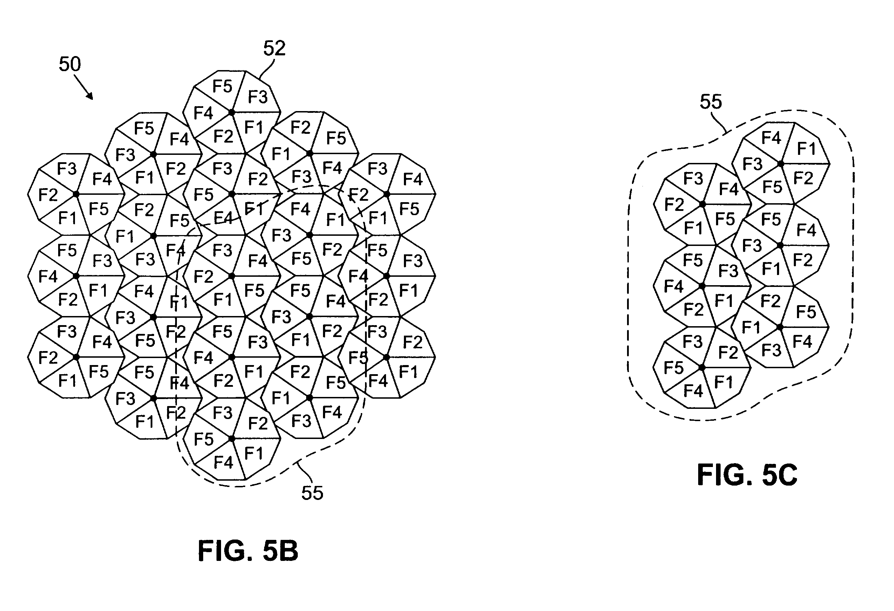

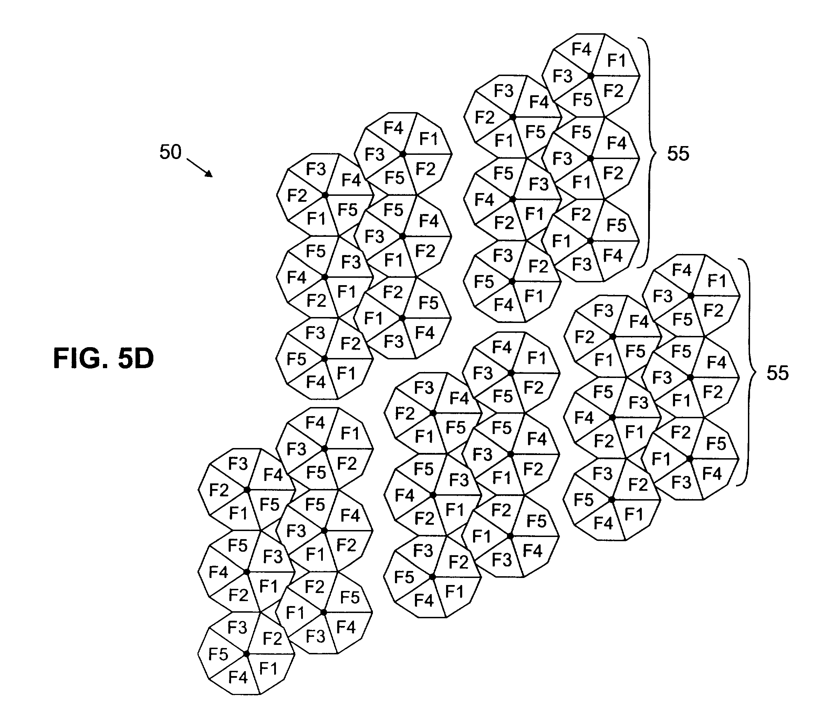

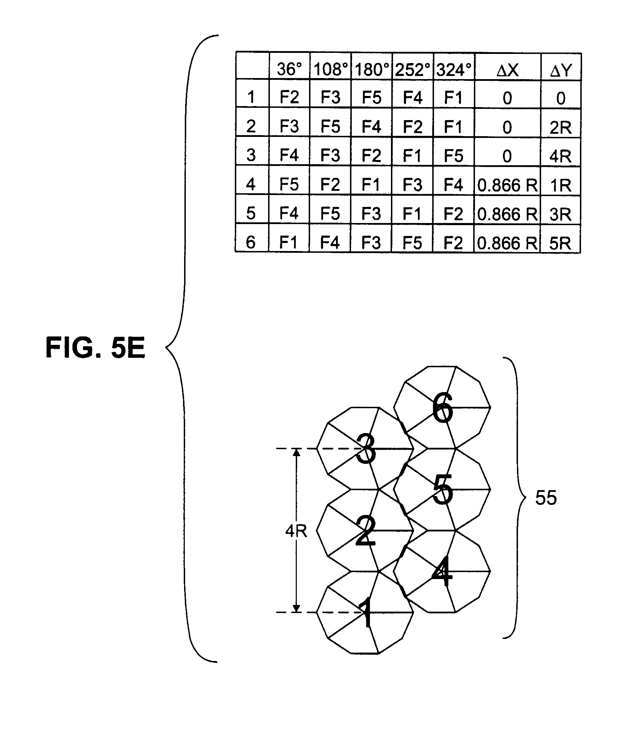

The five-sector cell pattern illustrated in FIG. 5A repeats itself in groups of six cells. FIG. 5B shows an exemplary group 55 of six cells 52 in the system 50, illustrating the six-cell repeating pattern. FIG. 5C shows the frequency channels F1, F2, F3, F4 and F5 assigned to the corresponding sectors S1, S2, S3, S4 and S5 in the six-cell group 55. FIG. 5D illustrates the manner in which a number of the six-cell groups may be replicated within the system 50. FIG. 5E shows the exemplary six-cell group 55 in greater detail. The cells of group 55 in FIG. 5E are designated as cells 1, 2, 3, 4, 5 and 6 as shown. The accompanying table indicates the frequency channels F1, F2, F3, F4 and F5 assigned to the five sectors of each of the six cells in the group 55, and corresponds to the frequency channel assignment illustrated in FIG. 5C. The sectors are identified in FIG. 5E by a pointing angle, as measured in a counter-clockwise direction from a cell sector edge 56. For example, in cell 1, the sector with a pointing angle of 36° relative to edge 56 is the sector immediately above edge 56, and is assigned frequency channel F2. Similarly, the sectors in cell 1 of group 55 with pointing angles of 108°, 180°, 252° and 324° relative to edge 56 are assigned frequency channels F3, F5, F4 and F1, respectively.

The table in FIG. 5E also lists the horizontal and vertical separation ΔX and ΔY of cells 2, 3, 4, 5 and 6 relative to cell 1 as a function of reuse distance R. The system 50, because it utilizes a reuse factor of one, has a reuse distance 2R which corresponds to the diameter of a single cell. The distance between the center of cell 1 and the center of cell 4 is therefore 4R, or four times the single cell radius. The table shows, for example, that the horizontal separation ΔX between cell 1 and cell 5 is 0.866R, while the vertical separation ΔY between cell 1 and cell 5 is 3R. Similar measures are provided in FIG. 5E for each of the other cells in group 55.

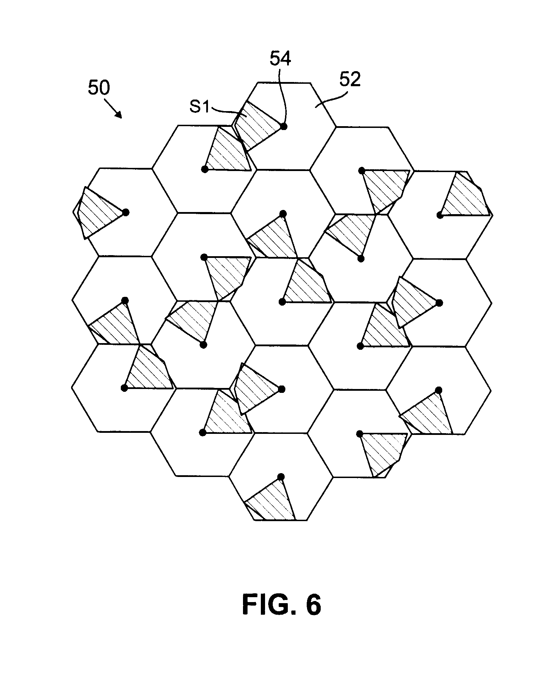

FIG. 6 more distinctly shows the sector configuration for the sector S1 in the packet-based wireless system 50 of FIGS. 5A-5E. The radiation direction of sector S1, and thus frequency channel F1, is shown for each of the cells 52 of the system 50. It should be understood that the shape of the cells is illustrative only. The shape of the cells 52 is shown as hexagonal in FIG. 6 in order to more clearly illustrate the potential co-channel interference. As noted above, the cells 52 of system 50 are arranged so as to minimize the co-channel interference which results from having adjacent cells operating in the same frequency channel, in an application in which users are equipped with directional terminals. Although some amount of co-channel interference results from the frequency reuse factor of one, the sector configuration shown in FIG. 6 minimizes this interference through appropriate arrangement of the five-sector cells. In addition, the directionality and front-to-back ratio of the antennas helps to alleviate some of the interference, such that overall performance is improved. Moreover, the packet-based nature of the system 50 allows it to overcome a certain amount of interference through the use of acknowledgments, retransmission attempts and the like. The other sectors of the system 50 are assigned in accordance with their positions relative to sector S1 as shown in FIGS. 5A-5E.

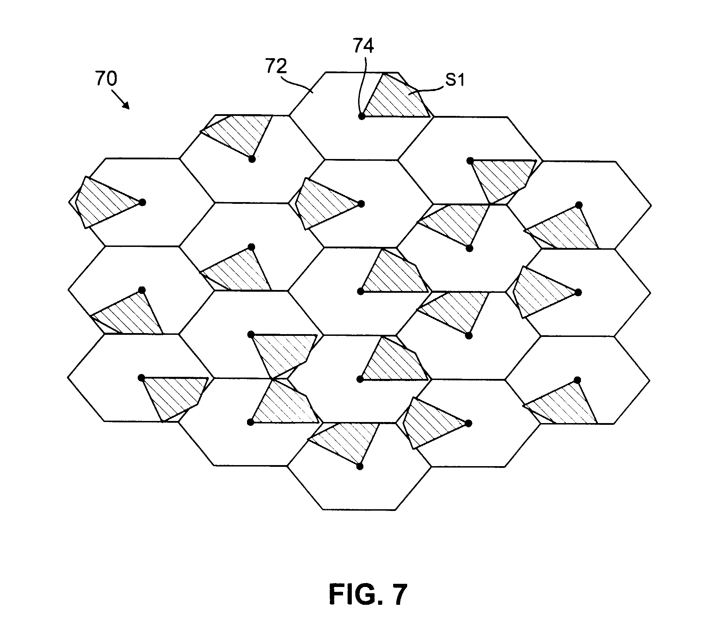

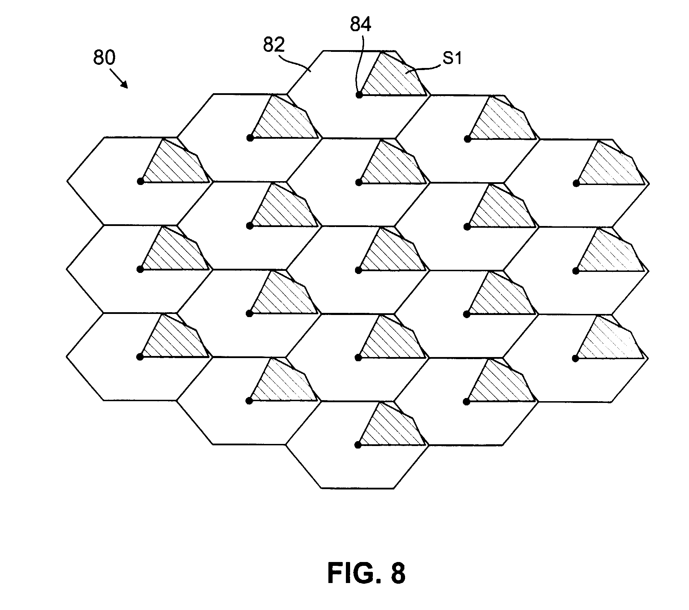

FIGS. 7 and 8 illustrate alternative configurations for a five-sector directional cell pattern in accordance with the invention. FIG. 7 shows a portion of a packet-based wireless system 70 with a number of cells 72 each including a base station 74. Each of the cells includes five approximately equivalent sectors S1, S2, S3, S4 and S5, as in the embodiment of FIGS. 5A-5E. The radiation direction is shown only for sector S1, and thus frequency channel F1, in each of the cells 72. The other sectors in each of the cells 72 may be assigned in accordance with their positions relative to sector S1 in one of the cells of FIG. 5A. However, unlike the embodiment of FIGS. 5A-5E, the embodiment of FIG. 7 uses the same relative ordering of the sectors within each of the cells 72.

The cells 72 of system 70 are arranged in accordance with an alternative cell pattern which utilizes a rotated sector pointing angle. In this cell pattern, each of the cells of the system is rotated by an integer number of sectors relative to a neighboring cell, in order to avoid interference caused by direct sector alignment. The pointing angle of a given sector may be characterized as an angle between a center line of that sector and a reference point, such as the center line of sector S1 in a particular cell. For example, the pointing angle of sector S1 in the uppermost cell 72 of FIG. 7 is rotated by approximately 72° relative to the pointing angles of the S1 sectors in the neighboring cells to the lower left and lower right of the uppermost cell. Similarly, the pointing angle of sector S1 in each of the other cells of FIG. 7 is rotated by approximately 72° relative to the pointing angle of sector S1 in at least one neighboring cell. It should be noted that this exemplary rotated sector pattern may not be optimal in that some cells will be likely to have higher interference than others. In alternative embodiments, the cell pattern may use a rotated sector pointing angle in which each of the cells is rotated by a non-integer number of sectors relative to a neighboring cell.

FIG. 8 shows a portion of a packet-based wireless system 80 with a number of cells 82 each including a base station 84. Each of the cells includes five approximately equivalent sectors S1, S2, S3, S4 and S5, as in the embodiment of FIGS. 5A-5E and 6, but with the cells arranged in accordance with an alternative cell pattern in which the sector position is fixed for each cell. Like FIGS. 6 and 7, FIG. 8 shows the radiation direction for sector S 1, and thus frequency channel F1, in each of the cells 82, with the other sectors of the cells 82 assigned in accordance with their positions relative to sector S1. Like the embodiment of FIG. 7, the embodiment of FIG. 8 uses the same relative ordering of the sectors within each of the cells 82. It should be noted that the rotated sector pattern of FIG. 7 may provide better performance than the fixed sector pattern of FIG. 8 in applications in which users are equipped with directional terminals. This is because with the rotated sector pattern there generally will be cases when given sectors will not lie on the same directional vector as other sectors. However, for applications in which users are equipped with omnidirectional terminals, the fixed sector pattern of FIG. 8 may provide better performance than the rotated sector pattern of FIG. 7. As noted previously, the pattern shown in FIG. 6 generally provides optimal performance for applications which utilize directional user terminals.

The above-described embodiments of the invention are intended to be illustrative only. Alternative embodiments may utilize different types of multi-sector directional cell patterns with a reduced frequency reuse factor in accordance with the invention. For example, the cell patterns in alternative embodiments may include more or less than five sectors. In addition, the sectors of a given multi-sector cell in alternative embodiments need not be approximately equivalent in coverage angle as in the illustrative embodiments. Furthermore, although particular cell patterns may provide optimal performance for a certain type of user terminal, such as directional user terminals, the patterns may also provide improved performance with other types of user terminals. These and numerous other alternative embodiments within the scope of the following claims will be apparent to those skilled in the art.

## Claims

1. A wireless communication system including:
a plurality of cells, at least a subset of the cells each including a base station having a multi-sector directional antenna associated therewith,
wherein the plurality of cells are arranged such that at least one of the cells utilizes at least one communication channel at substantially the same frequency as a communication channel utilized in another cell adjacent to the at least one cell.

2. Apparatus for use in a wireless communication system including a plurality of cells, the apparatus including:
a base station arranged within a given one of the plurality of cells; and
a multi-sector directional antenna associated with the base station,
wherein the multi-sector directional antenna is configured such that the given cell utilizes at least one communication channel at substantially the same frequency as a communication channel utilized in another cell adjacent to the given cell.

3. A system as claimed in claim 1, or apparatus as claimed in claim 2, wherein the multi-sector directional antenna is a five-sector directional antenna.

4. A system as claimed in claim 1, or apparatus as claimed in claim 2, wherein each of the plurality of cells includes a base station having a five-sector directional antenna associated therewith.

5. A system as claimed in claim 1, or apparatus as claimed in claim 2, wherein each of the plurality of cells includes a multi-sector directional antenna and utilizes substantially the same set of communication channels, and the assignment of sectors of the multi-sector antennas to the communication channels repeats itself for groups of the cells in accordance with a multi-cell sector assignment pattern.

6. A system as claimed in claim 1, or apparatus as claimed in claim 2, wherein the system is a packet-based system and at least a subset of the plurality of cells are arranged in accordance with a frequency reuse factor of one.

7. A system as claimed in claim 1, or apparatus as claimed in claim 2, wherein each of the plurality of cells includes a multi-sector directional antenna, and wherein the sectors of the directional antennas are arranged such that the sectors in a given cell are rotated relative to the sectors in a neighboring cell in order to avoid interference caused by direct sector alignment.

8. A system as claimed in claim 1, or apparatus as claimed in claim 2, wherein each of the plurality of cells includes a multi-sector directional antenna, and wherein positions of the sectors of the directional antennas are fixed for all of the cells.

9. A method of implementing a wireless communication system, including the steps of:
configuring a plurality of cells, at least a subset of the cells each including a base station having a multi-sector directional antenna associated therewith; and
operating the plurality of cells such that at least one of the cells utilizes at least one communication channel at substantially the same frequency as a communication channel utilized in another cell adjacent to the given cell.

10. A method as claimed in claim 9 wherein the configuring step includes arranging the cells such that each of the plurality of cells includes a base station having a five-sector directional antenna associated therewith.

11. A method as claimed in claim 9 wherein the configuring step includes arranging the plurality of cells such that each of the plurality of cells includes a multi-sector directional antenna and utilizes substantially the same set of communication channels, and wherein assignment of sectors of the multi-sector antennas to the communication channels repeats itself for groups of the cells in accordance with a multi-cell sector assignment pattern.

12. A method as claimed in claim 9 wherein the system is a packet-based system and the configuring step includes arranging the plurality of cells in accordance with a frequency reuse factor of one.

13. A method as claimed in claim 9 wherein each of the plurality of cells includes a multi-sector directional antenna, and the configuring step includes arranging the sectors of the directional antennas such that the sectors in a given cell are rotated relative to the sectors in a neighboring cell in order to avoid interference caused by direct sector alignment.

14. A method as claimed in claim 9 wherein each of the plurality of cells includes a multi-sector directional antenna, and wherein the configuring step includes arranging the cells such that sector positions of the directional antennas are fixed for all of the cells.
